# EUROPEAN PATENT APPLICATION

(11) **EP 4 850 948 A1**
(43) Date of publication of application: **09.12.2026**
(21) Application number: 25760885.1
(22) Date of filing: 25.02.2025
(51) Int. Cl.: B60K 1/04

(54) **VEHICLE BODY AND VEHICLE**

(30) Priority: 28.02.2024 CN 202410223334
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIU, Huan, Ningbo, Zhejiang 315899 (CN); CHUANG, Chao, Ningbo, Zhejiang 315899 (CN)
(74) Representative: Michalski Hüttermann & Partner mbB
(86) International application number: PCT/CN2025/078939
(87) International publication number: WO 2025/180344

(57) **Abstract**

A vehicle body (100) and a vehicle (800), relating to the technical field of vehicle parts. The vehicle body (100) includes a battery assembly (200), a sill beam (300), and a floor longitudinal beam (400). A side of the battery assembly (200) towards the sill beam (300) is provided with a first mounting portion (210) and a second mounting portion (220). An end of the battery assembly (200) is connected to the sill beam (300) through the first mounting portion (210), and another end of the battery assembly (200) is connected to the floor longitudinal beam (400) through the second mounting portion (220). In a vehicle body structure without a B-pillar, battery mounting points can be improved based on maximization of the battery volume, to ensure the side collision performance of the vehicle based on maximizing utilization of a sill space. Influence of a vehicle body without the B-pillar on the side collision performance and a related door mechanism is solved, and it is ensured that battery cells are not squeezed during a collision, thereby meeting collision requirements.

## Description

The present disclosure claims priority to Chinese Patent Application No. 202410223334.9, filed with CNIPA on February 28, 2024, entitled "VEHICLE BODY AND VEHICLE", the entire contents of which are incorporated herein by reference.

### TECHNICAL FIELD

The present disclosure relates to the technical field of vehicle parts, and in particular to a vehicle body and a vehicle.

### BACKGROUND

In recent years, development of the vehicle industry is relatively rapid, and the vehicle industry remains a core industry in future development. With continuous development of science and technology levels and continuous improvement of living standards of people, a demand for vehicle performance is also increasing. A structure of the vehicle usually includes a B-pillar, which refers to a position between a front door and a rear door of the vehicle. A main function of the B-pillar is to bear a side impact force, to fully ensure safety of a driver and a passenger, and to support an entire vehicle structure.

However, in order to improve the convenience for users in entering and exiting the vehicle and bring a better riding experience to users, the development of a vehicle body without the B-pillar has become a new trend in the development of the entire vehicle, which can allow a user to directly sit in the vehicle instead of having to crawl in, and at the same time can bring more usage scenarios to a seat, support 180° rotation of the seat, and create an office-like and home-like experience for the entire vehicle. Meanwhile, a size of the entire vehicle door opening will be more than twice that of the current vehicle model on the market, so it is crucial to ensure safety performance of the vehicle based on a design of the vehicle body without the B-pillar.

### SUMMARY

The following is a summary of subject matter described in detail herein. This summary is not intended to limit the scope of protection of the claims.

Embodiments of the present disclosure provide a vehicle body and a vehicle, where the vehicle body is configured to resolve the problem proposed in the foregoing BACKGROUND that in most vehicles at the present stage, a sill of a vehicle door is usually connected to a battery by a row of bolts, and after a vehicle body structure without a B-pillar is provided, the battery intrudes further into the space of vehicle body structural components, and a collision safety requirement for the battery is higher. The protection for the battery and the development of vehicle safety performance have become one of the important technical challenges hindering the development of the vehicle body without the B-pillar, restricting the mass production process of the vehicle body without the B-pillar. The development of the vehicle body without the B-pillar leads to the structural changes of the vehicle body, especially weakening of a force transmission structure of the sill and reduction of an arrangement space in the sill, resulting in the reduction of collision safety performance and crushing deformation of the battery. Therefore, the structure needs to be further researched and improved to meet the requirements of vehicle evaluation regulations.

To achieve the foregoing objective, embodiments of the present disclosure provide the following technical solutions.

A first aspect of the embodiments of the present disclosure provides a vehicle body, including a battery assembly, a sill beam, and a floor longitudinal beam; where
the battery assembly includes a first mounting portion and a second mounting portion on a side thereof towards the sill beam;
an end of the battery assembly is connected to the sill beam through the first mounting portion; and
another end of the battery assembly is connected to the floor longitudinal beam through the second mounting portion.

Based on the foregoing technical solutions, the present disclosure may further include the following improvements.

In a possible implementation, the battery assembly includes a battery body;
the battery body is connected to the first mounting portion and the second mounting portion;
the first mounting portion includes a plurality of first mounting points, and the first mounting portion is connected to the sill beam by a plurality of first fasteners in cooperation with the plurality of first mounting points; and
the second mounting portion includes a plurality of second mounting points, and the second mounting portion is connected to the floor longitudinal beam by a plurality of second fasteners in cooperation with the plurality of second mounting points.

In a possible implementation, the plurality of first mounting points are arranged side by side in a length direction of the battery body; and
the plurality of second mounting points are arranged side by side in the length direction of the battery body.

In a possible implementation, the plurality of first mounting points and the plurality of second mounting points are arranged in a staggered manner in a width direction of the battery body; and
orthographic projections of at least part of the plurality of second mounting points towards the plurality of first mounting points do not overlap with the plurality of first mounting points.

In a possible implementation, the first mounting portion is lower than the second mounting portion in a thickness direction of the battery body.

In a possible implementation, the vehicle body further includes a first cavity;
the sill beam includes the first cavity; and
an end of each of the plurality of first fasteners extends into the first cavity, and another end of each of the plurality of first fasteners is connected to the first mounting portion through a respective one of the plurality of first mounting points.

In a possible implementation, the vehicle body further includes a floor;
the sill beam is located on a side of the floor;
an inner space is enclosed by the floor longitudinal beam, the floor, and the sill beam to form a second cavity; and
an end of each of the plurality of second fasteners extends into the second cavity, and another end of each of the plurality of second fasteners is connected to the second mounting portion through a respective one of the plurality of second mounting points.

In a possible implementation, the vehicle body further includes a vehicle door and a partition;
the partition is located between the vehicle door and the sill beam;
when the vehicle door is closed, an inner space is enclosed by the vehicle door and the partition to form a third cavity; and
the partition and the first mounting portion are arranged side by side in a width direction of the vehicle body.

In a possible implementation, the third cavity, the first cavity, and the second cavity are arranged side by side in the width direction of the vehicle body.

A second aspect of the embodiments of the present disclosure provides a vehicle, including the foregoing vehicle body.

The embodiments of the present disclosure provide a vehicle body and a vehicle, where the vehicle body includes a battery assembly, a sill beam, and a floor longitudinal beam. A side of the battery assembly towards the sill beam is provided with a first mounting portion and a second mounting portion, an end of the battery assembly is connected to the sill beam through the first mounting portion, and another end of the battery assembly is connected to the floor longitudinal beam through the second mounting portion. The vehicle includes the foregoing vehicle body. In this way, with the embodiments of the present disclosure, in a vehicle body structure without a B-pillar, battery mounting points can be improved based on maximization of the battery volume, to ensure the side collision performance of a vehicle based on maximizing utilization of a sill space. The influence of the vehicle body without the B-pillar on the side collision performance and the related vehicle door mechanism is solved, and it is ensured that the battery cells are not squeezed during the collision, thereby meeting the collision requirements.

Other aspects will become apparent upon reading and understanding the accompanying drawings and detailed description.

### BRIEF DESCRIPTION OF DRAWINGS

To describe the technical solutions in the embodiments of the present disclosure or in the related art more clearly, the accompanying drawings required for describing the embodiments or the related art will be briefly described below. It is apparent that, the accompanying drawings in the following description are only some of the embodiments of the present disclosure, and those of ordinary skill in the art can obtain other embodiments from these accompanying drawings without creative efforts.
FIG. 1 is a schematic structural diagram of a vehicle body.
FIG. 2 is a schematic diagram of a partial structure of a vehicle body provided by an embodiment of the present disclosure.
FIG. 3 is a schematic top view of a structure of a battery body in a vehicle body provided by an embodiment of the present disclosure.
FIG. 4 is a schematic structural diagram of a vehicle provided by an embodiment of the present disclosure.

### Description of reference numerals:

100-vehicle body;
200-battery assembly; 210-first mounting portion; 211-first mounting point; 212-first fastener; 220-second mounting portion; 221-second mounting point; 222-second fastener; 230-battery body;
300-sill beam; 310-first cavity;
400-floor longitudinal beam; 410-second cavity;
500-floor;
600-vehicle door;
700-partition; 710-third cavity;
800-vehicle; 810-wheel; 820-windshield.

### DETAILED DESCRIPTION

As described in the BACKGROUND, in most vehicles at the present stage, a sill of a vehicle door is usually connected to a battery by a row of bolts, and after a vehicle body structure without a B-pillar is provided, the battery intrudes further into the space of vehicle body structural components, and a collision safety requirement for the battery is higher. The protection for the battery and the development of vehicle safety performance have become one of the important technical challenges hindering the development of the vehicle body without the B-pillar, restricting the mass production process of the vehicle body without the B-pillar. The development of the vehicle body without the B-pillar leads to the structural changes of the vehicle body, especially weakening of a force transmission structure of the sill and reduction of an arrangement space in the sill, resulting in the reduction of the collision safety performance and crushing deformation of the battery. Therefore, the structure needs to be further researched and improved to meet the requirements of vehicle evaluation regulations.

In view of the foregoing technical problem, embodiments of the present disclosure provide a vehicle body and a vehicle, where the vehicle body includes a battery assembly, a sill beam, and a floor longitudinal beam. A side of the battery assembly towards the sill beam is provided with a first mounting portion and a second mounting portion, an end of the battery assembly is connected to the sill beam through the first mounting portion, and another end of the battery assembly is connected to the floor longitudinal beam through the second mounting portion. The vehicle includes the foregoing vehicle body. In this way, with the embodiments of the present disclosure, in a vehicle body structure without a B-pillar, battery mounting points can be improved based on maximization of the battery volume, to ensure the side collision performance of a vehicle based on maximizing utilization of a sill space. The influence of the vehicle body without the B-pillar on the side collision performance and the related vehicle door mechanism is solved, and it is ensured that the battery cells are not squeezed during the collision, thereby meeting the collision requirements.

To make the foregoing objectives, features, and advantages of the embodiments of the present disclosure more apparent and understandable, the technical solutions in the embodiments of the present disclosure will be described clearly and completely below with reference to the accompanying drawings in the embodiments of the present disclosure. It is apparent that, the described embodiments are only a part of the embodiments of the present disclosure, rather than all of the embodiments. All other embodiments obtained by a person of ordinary skill in the art based on the embodiments of the present disclosure without creative efforts shall fall within the scope of protection of the present disclosure.

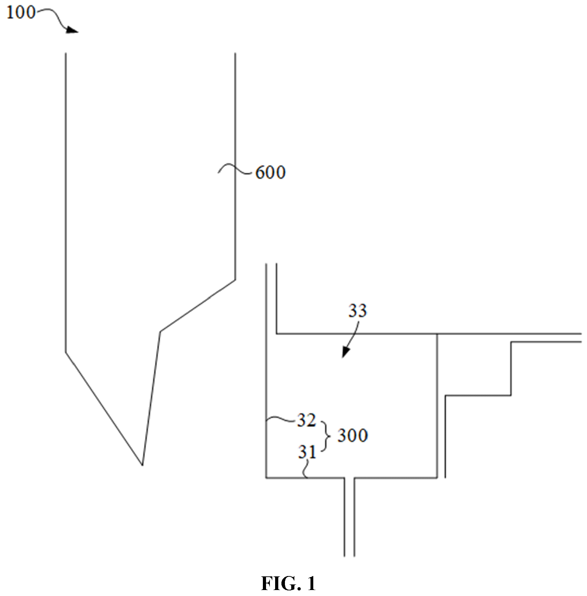

FIG. 1 is a schematic diagram of a partial structure of a vehicle body 100. Referring to FIG. 1, the vehicle body 100 may include a vehicle door 600 and a sill beam 300. The sill beam 300, due to its own structural characteristics, may include a plurality of cross beams 31 and a plurality of longitudinal beams 32, so that the sill beam 300 can define a closed space 33 enclosed by the cross beams 31 or the longitudinal beams 32, and thus the sill beam 300 may have a closed cavity 33.

However, the vehicle body 100 shown in FIG. 1 has the following defects. When the vehicle body 100 is provided without a B-pillar, the vehicle body 100 needs to maintain its characteristics such as the strength and the rigidity compared with the vehicle body 100 with the B-pillar, and when the vehicle body 100 encounters a side collision, the closed cavity 33 of the sill beam 300 has a relatively single force transmission path, which cannot well resist the collision deformation and cannot protect the battery cells in the vehicle.

To resolve the foregoing problem, embodiments of the present disclosure provide a vehicle body and a vehicle. In a vehicle body structure without a B-pillar, battery mounting points can be improved based on maximization of the battery volume, to ensure the side collision performance of the vehicle based on maximizing utilization of the sill space. Specific structures of the vehicle body and the vehicle provided by the embodiments of the present disclosure will be described below with reference to the accompanying drawings.

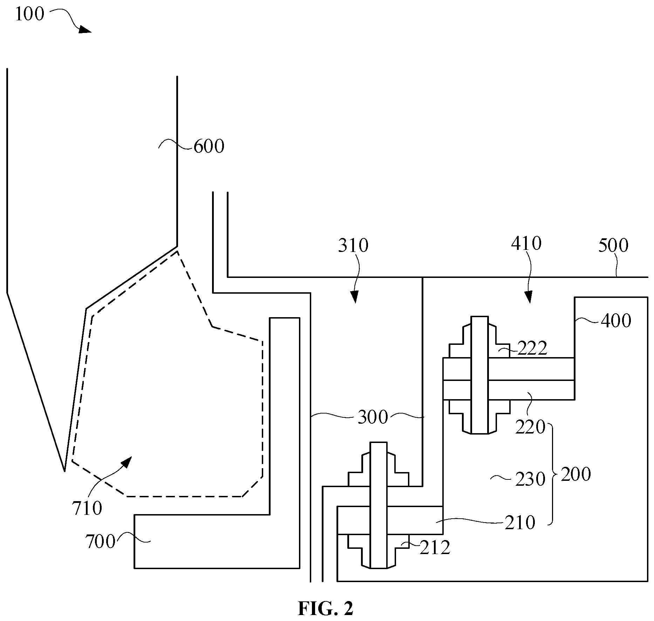

Referring to FIG. 2, a first aspect of the embodiments of the present disclosure provides a vehicle body 100, where the vehicle body 100 may include a battery assembly 200, a sill beam 300, and a floor longitudinal beam 400. The sill beam 300 may be located on a side of the floor longitudinal beam 400, and the sill beam 300 and the floor longitudinal beam 400 may form a frame of the vehicle body 100. In the embodiments of the present disclosure, a side of the battery assembly 200 towards the sill beam 300 may be provided with a first mounting portion 210, and correspondingly, a side of the battery assembly 200 towards the floor longitudinal beam 400 may be provided with a second mounting portion 220. In a possible implementation, an end of the battery assembly 200 may be connected to the sill beam 300 through the first mounting portion 210, and another end of the battery assembly 200 may be connected to the floor longitudinal beam 400 through the second mounting portion 220.

With continued reference to FIG. 2, in a specific implementation of the embodiment, the battery assembly 200 may include a battery body 230. In a possible implementation, the sill beam 300 and the floor longitudinal beam 400, due to their own structural characteristics, may include a plurality of cross beams and a plurality of longitudinal beams, respectively, so the sill beam 300 and the floor longitudinal beam 400 may have stepped structures. However, in a possible implementation, the battery body 230 may be rectangular, but a shape of the battery body 230 is not limited in the present disclosure. Therefore, the battery body 230 may be connected to the sill beam 300 and the floor longitudinal beam 400 by providing the first mounting portion 210 and the second mounting portion 220. In the embodiments of the present disclosure, the battery body 230 may be connected to the first mounting portion 210 and the second mounting portion 220, so that the battery body 230 can be secured in the vehicle body 100.

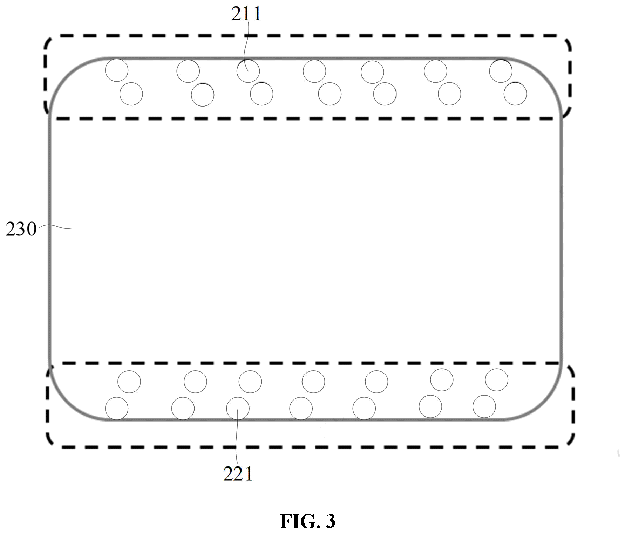

Referring to FIGS. 2 and 3, based on the above embodiments, the first mounting portion 210 may be provided with a first mounting point 211, and correspondingly, the second mounting portion 220 may be provided with a second mounting point 221. In a possible implementation, there may be a plurality of first mounting points 211 and a plurality of second mounting points 221, but the number of the first mounting point 211 and the number of the second mounting point 221 are not limited in the present disclosure. It can be understood that the first mounting portion 210 may be further provided with a first fastener 212, and correspondingly, the second mounting portion 220 may be further provided with a second fastener 222. In a possible implementation, there may be a plurality of first fasteners 212 and a plurality of second fasteners 222, but the number of the first fastener 212 and the number of the second fastener 222 are not limited in the present disclosure. The first fasteners 212 may be in one-to-one correspondence with the first mounting points 211, and the second fasteners 222 may also be in one-to-one correspondence with the second mounting points 221. In this way, in the embodiments of the present disclosure, the first mounting portion 210 may be connected to the sill beam 300 by the plurality of first fasteners 212 in cooperation with the plurality of first mounting points 211, and the second mounting portion 220 may be connected to the floor longitudinal beam 400 by the plurality of second fasteners 222 in cooperation with the plurality of second mounting points 221. In a possible implementation, the first fastener and the second fastener may be bolts, but the first fastener and the second fastener are not limited in the present disclosure.

With continued reference to FIG. 3, based on the above embodiments, the plurality of first mounting points 211 may be arranged side by side in a length direction of the battery body 230, and correspondingly, the plurality of second mounting points 221 may also be arranged side by side in the length direction of the battery body 230. In this way, the plurality of first mounting points 211 may form a row, and the plurality of second mounting points 221 may also form a row, enabling the more stable connection of the battery body 230 through the plurality of first mounting points 211 and the plurality of second mounting points 221, thereby improving the connection rigidity between the battery body 230 and the vehicle body 100.

With continued reference to FIG. 3, based on the above embodiments, the plurality of first mounting points 211 and the plurality of second mounting points 221 may be arranged in a staggered manner in a width direction of the battery body 230. It may be understood that orthographic projections of at least part of the plurality of second mounting points 221 towards the plurality of first mounting points 211 do not overlap with the plurality of first mounting points 211. In this way, the entire row of first mounting points 211 and the entire row of second mounting points 221 are arranged in a staggered manner, and when the vehicle 800 encounters a side collision, the arrangement of the plurality of first mounting points 211 and the plurality of second mounting points 221 is more uniform, which can disperse the collision force, better resist the collision deformation, and protect the battery body 230.

With continued reference to FIG. 2, based on the above embodiments, the first mounting portion 210 may be lower than the second mounting portion 220 in a thickness direction of the battery body 230. In the embodiments of the present disclosure, the first mounting portion 210 may be disposed at a lower position of the sill beam 300, and the second mounting portion 220 may be disposed at a higher position of the floor longitudinal beam 400, so that maximization of the battery volume can be ensured, thereby ensuring an endurance capability of the battery.

With continued reference to FIG. 2, based on the above embodiments, the vehicle body 100 may further include a first cavity 310. The sill beam 300 may be provided with the first cavity 310. The sill beam 300, due to its own structural characteristics, may include a plurality of cross beams and a plurality of longitudinal beams, so that the sill beam 300 can define a closed space enclosed by the cross beams or the longitudinal beams, and thus the sill beam 300 may be provided with the first cavity 310. In the embodiments of the present disclosure, in a possible implementation, an end of each of the plurality of first fasteners 212 may extend into the first cavity 310, and another end of each of the plurality of first fasteners 212 may be connected to the first mounting portion 210 through a respective one of the plurality of first mounting points 211, so that the first mounting portion 210 is connected to the sill beam 300 and the first cavity 310 by the plurality of first fasteners 212 passing through the plurality of first mounting points 211.

With continued reference to FIG. 2, based on the above embodiments, the vehicle body 100 may further include a floor 500. The sill beam 300 is located on a side of the floor 500. In a possible implementation, the floor 500 may be configured as a rectangle. However, in some other embodiments, the floor 500 may alternatively be in another shape. A shape of the floor 500 is not limited in the present disclosure. In the embodiments of the present disclosure, an inner space enclosed by the floor longitudinal beam 400, the floor 500, and the sill beam 300 may form a second cavity 410. The floor longitudinal beam 400, due to its own structural characteristics, may include a plurality of cross beams and a plurality of longitudinal beams. In a possible implementation, an end of each of the plurality of second fasteners 222 may extend into the second cavity 410, and another end of each of the plurality of second fasteners 222 may be connected to the second mounting portion 220 through a respective one of the plurality of second mounting points 221, so that the second mounting portion 220 is connected to the floor longitudinal beam 400 and the second cavity 410 by the plurality of second fasteners 222 passing through the plurality of second mounting points 221.

With continued reference to FIG. 2, based on the above embodiments, the vehicle body 100 may further include a vehicle door 600 and a partition 700. The partition 700 may be located between the vehicle door 600 and the sill beam 300. In a possible implementation, there may be a gap between the vehicle door 600 and the sill beam 300, the partition 700 may be located in the gap between the vehicle door 600 and the sill beam 300, and a side of the partition 700 may be connected to the sill beam 300, so that the partition 700 is secured to the sill beam 300. In the embodiments of the present disclosure, when the vehicle door 600 is closed, an inner space enclosed by the vehicle door 600 and the partition 700 may form a third cavity 710. In this way, the arrangement of the partition 700 can enhance a force transmission path between the vehicle door 600 and the sill beam 300. It should be noted that the partition 700 and the first mounting portion 210 may be arranged side by side in a width direction of the vehicle body 100. When the vehicle body 100 encounters the side collision, the partition 700 may resist a portion of the collision force for the first mounting portion 210 inward of the partition 700, thereby protecting the battery body 230 inside the vehicle body 100.

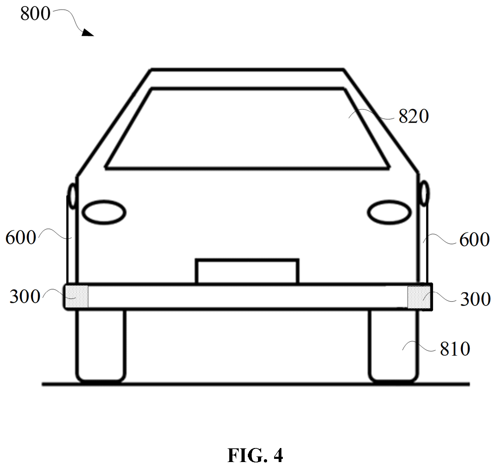

Referring to FIGS. 2 and 4, in the embodiments of the present disclosure, the vehicle body 100 may have at least two vehicle doors 600, and the sill beams 300 are correspondingly disposed below the vehicle doors 600, respectively. The sill beams 300 may be respectively located on two sides of the floor 500 in the width direction, so that an occupant can enter the vehicle body 100 through the sill beams 300. It may be understood that, compared with the closed cavity of the sill beam 300 in the related art, a size of the first cavity 310 may be set to be slightly smaller than a size of the closed cavity, to provide a space for the third cavity 710 on a side of the first cavity 310, so as to enhance the force transmission path between the vehicle door 600 and the sill beam 300.

Based on the above embodiments, the sill beams 300 may be respectively located on two sides of the battery assembly 200 in the width of the battery body 230. In this way, each side of the battery assembly 200 towards the sill beam 300 may be provided with the first mounting portion 210 and the second mounting portion 220, so as to provide protection for both sides of the vehicle body.

With continued reference to FIG. 2, based on the above embodiments, the third cavity 710, the first cavity 310, and the second cavity 410 may be arranged side by side in the width direction of the vehicle body 100. The partition 700 is disposed between the third cavity 710 and the first cavity 310, and the sill beam 300 is disposed between the first cavity 310 and the second cavity 410, so that the three cavities, i.e., the first cavity 310, the second cavity 410, and the third cavity 710 are separated to form three independent cavities. In the embodiments of the present disclosure, the third cavity 710, the first cavity 310, and the second cavity 410 are arranged side by side in the width direction of the vehicle body 100, so that when the vehicle 800 encounters the side collision, the force transmission path between the vehicle door 600 and the sill beam 300 can be enhanced, and a bending resistance of the vehicle 800 in a side collision direction can be increased. The force transmission path between the vehicle door 600 and the sill beam 300 is from the third cavity 710 to the first cavity 310 and then to the second cavity 410, so that the intensity of the force progressively decreases, which well protects the battery body 230 located below the floor longitudinal beam 400, better resists the collision deformation, and further protects the battery cells inside the battery body 230.

Based on the above embodiments, the partition 700 may be made of an aluminum beam. It should be noted that the aluminum beam has the characteristics of light weight, high strength, corrosion resistance, ease of processing, environmental friendliness, and the like. It can save a certain cost, reduce the weight inside the vehicle body 100, improve the bending resistance of the vehicle 800 in the side collision direction, and enhance the force transmission path between the vehicle door 600 and the sill beam 300.

Referring to FIG. 4, a second aspect of the embodiments of the present disclosure provides a vehicle 800, where the vehicle 800 may include the foregoing vehicle body 100. In a possible implementation, the vehicle 800 may further include components such as a wheel 810 and a windshield 820, which form the vehicle 800 together with the vehicle body 100.

In the embodiments of the present disclosure, in the vehicle body structure without the B-pillar, battery mounting points are improved based on maximization of the battery volume, to ensure the side collision performance of the vehicle 800 based on maximizing utilization of the sill space. The influence of the vehicle body without the B-pillar on the side collision performance and a related mechanism of the vehicle door 600 is solved, and it is ensured that the battery cells are not squeezed during the collision, thereby meeting the collision requirements. When the vehicle body 100 is provided without the B-pillar, by adding the arrangement of the third cavity 710, the force transmission path between the vehicle door 600 and the sill beam 300 is enhanced, while taking into account the arrangement space of the vehicle door 600 and the rigidity of the vehicle body structure. Compared with the related art, an overall cavity area of the first cavity 310, the second cavity 410, and the third cavity 710 is greater than a cavity area of the closed cavity in an existing sill beam 300, so that the vehicle 800 can better resist the collision deformation, further protecting the battery body 230 in the vehicle 800.

In the embodiments of the present disclosure, compared with the related art, the battery mounting points are improved, and a row of battery mounting points are further provided based on the existing row of battery mounting points. By arranging the entire row of first mounting points 211 and the entire row of second mounting points 221 in a staggered manner, when the vehicle 800 encounters the side collision, the arrangement of the plurality of first mounting points 211 and the plurality of second mounting points 221 is more uniform, which can disperse the collision force, better resist the collision deformation, and protect the battery body 230. In addition, forces are transmitted through the third cavity 710, the first cavity 310, and the second cavity 410 in ascending order of cavity strength, where the third cavity 710 and the first cavity 310 absorb energy and deform, and the second cavity 410 resists the deformation, which better protects the battery body 230 from being crushed by the collision, thereby improving the safety of the battery body 230 and the vehicle 800.

The embodiments or implementations in this specification are described in a progressive manner, each embodiment focuses on the differences from other embodiments, and the same or similar portions between the embodiments can be referred to each other.

It should be noted that references in the specification to "in specific implementation", "in some embodiments", "in the embodiment", "exemplarily", etc., indicate that the embodiment described may include a particular feature, structure, or characteristic, but not every embodiment necessarily includes the particular feature, structure, or characteristic. Moreover, such a phrase does not necessarily refer to the same embodiment. Further, when a particular feature, structure, or characteristic is described in connection with the embodiments, it would be within the knowledge of one skilled in the art to effect such a feature, structure, or characteristic in connection with other embodiments explicitly described or not explicitly described.

In general, terminology should be understood at least in part from usage in context. For example, the term "one or more" as used herein, depending at least in part upon context, may be used to describe any feature, structure, or characteristic in a singular sense or may be used to describe combinations of features, structures, or characteristics in a plural sense. Similarly, terms, such as "a," "an," or "the," may be understood to convey a singular usage or to convey a plural usage, depending at least in part upon context.

It should be easily understood that "on...", "above...", and "on top of..." in the present disclosure should be interpreted in the broadest manner, so that "on..." not only means "directly on something", but also includes the meaning of "on something" with an intermediate feature or layer therebetween, and "above..." or "on top of..." not only includes the meaning of "above something" or "on top of something", but can also include the meaning of "above something" or "on top of something" without intermediate feature or layer therebetween (i.e., directly on something).

Further, spatially relative terms, such as "beneath", "below", "lower," "above", "upper", and the like, may be used herein for ease of description to describe a relationship between an element or feature and other elements or features as illustrated in the drawings. Spatially relative terms are intended to encompass different orientations of a device in use or operation in addition to an orientation illustrated in the drawings. An apparatus may be otherwise oriented (rotated 90 degrees or at other orientations) and the spatially relative descriptors used herein may likewise be interpreted, accordingly.

Finally, it should be noted that the above embodiments are only used to illustrate the technical solutions of the present disclosure, but not to limit the present disclosure. Although the present disclosure has been described in detail with reference to the foregoing embodiments, those of ordinary skill in the art should understand that they can still modify the technical solutions described in the foregoing embodiments, or make equivalent substitutions for some or all of the technical features. And, these modifications or substitutions do not make the essence of the corresponding technical solutions depart from the scope of the technical solutions of the embodiments of the present disclosure.

## Claims

1. A vehicle body, comprising a battery assembly, a sill beam, and a floor longitudinal beam; wherein
the battery assembly comprises a first mounting portion and a second mounting portion on a side thereof towards the sill beam;
an end of the battery assembly is connected to the sill beam through the first mounting portion; and
another end of the battery assembly is connected to the floor longitudinal beam through the second mounting portion.

2. The vehicle body according to claim 1, wherein
the battery assembly comprises a battery body;
the battery body is connected to the first mounting portion and the second mounting portion;
the first mounting portion comprises a plurality of first mounting points, and the first mounting portion is connected to the sill beam by a plurality of first fasteners in cooperation with the plurality of first mounting points; and
the second mounting portion comprises a plurality of second mounting points, and the second mounting portion is connected to the floor longitudinal beam by a plurality of second fasteners in cooperation with the plurality of second mounting points.

3. The vehicle body according to claim 2, wherein
the plurality of first mounting points are arranged side by side in a length direction of the battery body; and
the plurality of second mounting points are arranged side by side in the length direction of the battery body.

4. The vehicle body according to claim 3, wherein
the plurality of first mounting points and the plurality of second mounting points are arranged in a staggered manner in a width direction of the battery body; and
orthographic projections of at least part of the plurality of second mounting points towards the plurality of first mounting points do not overlap with the plurality of first mounting points.

5. The vehicle body according to claim 4, wherein the first mounting portion is lower than the second mounting portion in a thickness direction of the battery body.

6. The vehicle body according to claim 2, wherein
the vehicle body further comprises a first cavity;
the sill beam comprises the first cavity; and
an end of each of the plurality of first fasteners extends into the first cavity, and another end of each of the plurality of first fasteners is connected to the first mounting portion through a respective one of the plurality of first mounting points.

7. The vehicle body according to claim 6, wherein
the vehicle body further comprises a floor;
the sill beam is located on a side of the floor;
an inner space is enclosed by the floor longitudinal beam, the floor, and the sill beam to form a second cavity; and
an end of each of the plurality of second fasteners extends into the second cavity, and another end of each of the plurality of second fasteners is connected to the second mounting portion through a respective one of the plurality of second mounting points.

8. The vehicle body according to claim 7, wherein
the vehicle body further comprises a vehicle door and a partition;
the partition is located between the vehicle door and the sill beam;
when the vehicle door is closed, an inner space is enclosed by the vehicle door and the partition to form a third cavity; and
the partition and the first mounting portion are arranged side by side in a width direction of the vehicle body.

9. The vehicle body according to claim 8, wherein the third cavity, the first cavity, and the second cavity are arranged side by side in the width direction of the vehicle body.

10. A vehicle, comprising the vehicle body according to any one of claims 1 to 9.
